# EUROPÄISCHE PATENTSCHRIFT

(11) **EP 3 789 102 B1**
(45) Veröffentlichungstag und Bekanntmachung des Hinweises auf die Patenterteilung: **23.03.2022**
(21) Anmeldenummer: 19020517.9
(22) Anmeldetag: 06.09.2019
(51) Int. Cl.: B01D 53/14, C10K 1/00, C10K 1/16

(54) **VERFAHREN UND ANLAGE ZUR ABTRENNUNG VON BEGLEITSTOFFEN AUS EINEM ROHSYNTHESEGASSTROM UND ZUR HERSTELLUNG EINES SCHWEFELFREIEN NAPHTHA-PRODUKTES**
METHOD AND INSTALLATION FOR SEPARATING ADDITIVES FROM A CRUDE SYNTHESIS GAS STREAM AND FOR PRODUCING A SULFUR-FREE NAPHTHA PRODUCT
PROCÉDÉ ET INSTALLATION PERMETTANT DE SÉPARER DES IMPURETÉS D'UN COURANT DE GAZ DE SYNTHÈSE BRUT ET DE FABRIQUER UN PRODUIT DE NAPHTHA EXEMPT DE SOUFRE

(43) Veröffentlichungstag der Anmeldung: 10.03.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schmidt, Sophia, 60486 Frankfurt (DE); Corbet, Sharon, 60438 Frankfurt (DE)
(74) Vertreter: Stang, Stefan

(56) Entgegenhaltungen:
- DE-A1-102014 118 345
- US-A1- 2018 272 269

## Beschreibung

### Gebiet der Erfindung

Die Erfindung betrifft ein Verfahren sowie eine Anlage zur stufenweisen Abtrennung von Begleitstoffen aus einem Rohsynthesegasstrom zur Erzeugung von Synthesegas und eines schwefelfreien Naphtha-Produkts als Nebenerzeugnis. Die Erfindung betrifft ferner die Verwendung des erfindungsgemäßen Verfahrens und der erfindungsgemäßen Anlage zur Behandlung eines Rohsynthesegases aus einer Festbettdruckvergasung eines kohlenstoffhaltigen Einsatzstoffes.

### Stand der Technik

Verfahren zur Abtrennung von unerwünschten Begleitstoffen aus technischen Rohsynthesegasen mittels physikalischer Absorption sind aus dem Stand der Technik bekannt. So können mit solchen Verfahren unerwünschte Bestandteile aus durch Vergasung oder Reformierung von kohlenstoffhaltigen Einsatzstoffen erzeugten Rohsynthesegasen, beispielsweise Kohlendioxid (CO₂), Schwefelwasserstoff (H₂S) und Carbonylsulfid (COS) von den erwünschten Synthesegasbestandteilen wie Wasserstoff (H₂) und Kohlenmonoxid (CO) bis in den Spurenbereich entfernt werden.

In diesen auch als Gaswäschen bezeichneten Verfahren werden die Eigenschaften von Flüssigkeiten ausgenutzt, gasförmige Stoffe zu absorbieren und physikalisch oder chemisch gebunden in Lösung zu halten. Wie gut ein Gas von einer Flüssigkeit absorbiert wird, wird durch den Absorptionskoeffizienten ausgedrückt. Je besser das Gas in der Flüssigkeit absorbiert oder gelöst wird, desto größer ist der Absorptionskoeffizient. Der Absorptionskoeffizient steigt im Allgemeinen mit sinkender Temperatur und, nach dem Gesetz von Henry, mit steigendem Druck. Die in Gaswäschen eingesetzten Flüssigkeiten werden allgemein auch als Waschmittel bezeichnet.

Bei der Gaswäsche aus dem Rohsynthesegas ausgewaschene Komponenten werden im Anschluss an die Gaswäsche aus dem beladenen Waschmittel entfernt, wodurch ein regeneriertes oder zumindest teilregeneriertes Waschmittel erhalten wird. Bekannte Verfahren zur Regenerierung des Waschmittels sind Druckentspannung (Flashen), Druckentspannung mit Stripp-Gas (Strippen) sowie Druckentspannung mit Stripp-Gas, wobei der Eigendampf des Waschmittels als Stripp-Gas verwendet wird (Heißregenerierung). Um für eine erneute Absorption von Gaskomponenten aus dem Rohsynthesegas verwendet werden zu können, wird das Waschmittel in der letzten Regenerationsstufe üblicherweise einer Heißregenerierung unterzogen. Durch die Heißregenerierung wird ein nahezu reines Waschmittel zurückgewonnen, welches sich für die erneute Absorption von unerwünschten Gasbestandteilen aus dem Rohsynthesegas eignet.

Ein für die Reinigung von Rohsynthesegasen bedeutsames Verfahren ist die auch als Rectisol-Verfahren bekannte Methanol-Wäsche, welche beispielsweise in UII-mann's Encyclopedia of Industrial Chemistry, 6. Aufl. Bd. 15, S. 399 ff. grundsätzlich beschrieben wird. Das Rectisol-Verfahren nutzt die Tatsache aus, dass sich die Absorptionskoeffizienten von H₂S, COS und CO₂ in flüssigem, tiefkaltem Methanol um mehrere Größenordnungen von denen von H₂ und CO unterscheiden. Das Methanol wird nach dem Waschvorgang regeneriert und wieder in den Prozess zurückgeführt.

In Abhängigkeit des verwendeten Einsatzstoffes zur Erzeugung des Rohsynthesegases müssen durch das betreffende Gaswäscheverfahren gegebenenfalls weitere Begleitstoffe aus dem Rohsynthesegas zur Erzeugung des (gereinigten) Synthesegases entfernt werden. Beispielsweise fallen bei der Festbettdruckvergasung von kohlenstoffhaltigen Einsatzstoffen, insbesondere von Kohle, neben den üblichen unerwünschten Begleitstoffen (H₂S, COS und CO₂) weitere schwefelhaltige Begleitstoffe wie Alkylmercaptane, Heteroaromaten wie Thiophen, sowie meist gesättigte aliphatische Kohlenwasserstoffe sowie aromatische Kohlenwasserstoffe an, welche aus dem Rohsynthesegas zu entfernen sind. Dabei zählen zu den aliphatischen Kohlenwasserstoffen insbesondere bei Normaldruck gasförmige und leichtsiedende Kohlenwasserstoffe, beispielsweise mit 2 bis 7 Kohlenstoffatomen. In geringem Umfang können auch höhersiedende Kohlenwasserstoffe, beispielsweise mit 6 bis 12 Kohlenstoffatomen, im Rohsynthesegas enthalten sein. Zu den aromatischen Kohlenwasserstoffen zählen insbesondere Verbindungen wie Benzol, Toluol und Xylole, welche zusammengefasst häufig als "BTX" Verbindungen bezeichnet werden. Die leichtsiedenden aliphatischen Kohlenwasserstoffe und BTX-Aromaten, sowie gegebenfalls vorhandenen höhersiedenden Kohlenwasserstoffe werden in diesem Zusammenhang häufig zusammenfassend als "Naphtha" bezeichnet. Bei der Gaswäsche von Rohsynthesegasen aus Festbettdruckvergasungen stellen somit insbesondere die vollständige Entfernung von Naphtha und Alkylmercaptanen eine an den Prozess zu stellende Aufgabe dar.

Zur Lösung dieser Aufgabe kommen in bekannten Industrieverfahren häufig sogenannte Vorwaschstufen zum Einsatz, in denen das Naphtha und die Alkylmercaptane entfernt werden, bevor in den nachgeschalteten Hauptwaschstufen die "Hauptverunreinigungen", in der Regel CO₂ und H₂S, sowie in geringerer Menge COS, entfernt werden. In Gasflussrichtung sind die Hauptwaschstufen stets stromabwärts zu den Vorwaschstufen angeordnet.

Fällt Naphtha als Begleitstoffgruppe im Rohsynthesegas an, so sind die bei der Gaswäsche abgetrennten Mengen bei Industrieprozessen in der Regel so hoch, dass das Naphtha einer Valorisierung zugeführt werden sollte. So kann das aus dem Rohsynthesegas abgetrennte Naphtha beispielsweise zur Nutzung als Treibstoff weiterverarbeitet werden. Dadurch sind an das abgetrennte Naphtha, welches ein Nebenerzeugnis der Synthesegasherstellung darstellt, die gleichen Qualitätsanforderungen zu stellen, die auch an das im Hauptprozess erzeugte Synthesegas zu stellen sind. Insbesondere sollte auch das als Nebenprodukt erzeugte Naphtha frei von jeglichen Schwefelverbindungen sein.

Bei der vorgenannten Anwendung von Vorwäschern tritt das Problem auf, dass Naphtha und Alkylmercaptane sowie weitere Schwefelverbindungen im Vorwäscher in der Regel co-absorbiert werden. Das ist unabhängig davon der Fall, ob der Vorwäscher nur eine oder mehrere Vorwaschstufen umfasst. Die Absorptionskoeffizienten der in Naphtha enthaltenen Verbindungen und von Alkylmercaptanen differieren in Bezug auf die üblicherweise verwendeten Waschmittel und Temperaturbereiche nicht so stark, dass eine vollständig selektive Absorption beider Stoffarten bei der Verwendung mehrerer Vorwaschstufen in einem wirtschaftlich vertretbaren Rahmen möglich wäre.

Die DE 10 2014 118 345 A1 offenbart einen Vorwäscher, welcher zwei Vorwaschstufen umfasst. Dabei wird in der ersten Vorwaschstufe hauptsächlich Naphtha vom Waschmittel, in diesem Fall Methanol, absorbiert. Dabei ist eine Co-Absorption von Alkylmercaptanen und anderen Schwefelverbindungen im Methanol der ersten Vorwaschstufe unvermeidbar.

US 2018/272269 A1 offenbart ein Verfahren zur Entfernung von Sauergasen durch Verwendung eines Waschmittels, welches eine chemische Waschmittelkomponente und ein nicht-chemische (physikalische) Waschmittelkomponente umfasst, die jeweils Sauergase absorbieren, wobei die Regeneration des Waschmittels das Trennen der beiden Waschmittel-Komponenten voneinander in getrennten Strömen und das Bewirken der Desorption aus jedem Strom unter Verwendung unterschiedlicher Desorptionsbedingungen beinhaltet.

In der zweiten Vorwaschstufe gemäß DE 10 2014 118 345 A1 werden hauptsächlich Alkylmercaptane absorbiert. Das in dieser Vorwaschstufe erzeugte, mit Alkylmercaptanen beladene Methanol wird teilweise zur Verwendung als Waschmittel in der ersten Vorwaschstufe aus der zweiten Vorwaschstufe abgezogen. Das aus der zweiten Vorwaschstufe abgezogene Waschmittel enthält somit bereits Alkylmercaptane, welche zusätzlich in das Waschmittel der ersten Vorwaschstufe eingebracht werden. In einem nachgelagerten Verfahrensschritt wird das Naphtha mittels Wasser extraktiv abgetrennt. Die Alklymercaptane verbleiben dabei in der Naphtha-Phase, beziehungsweise reichern sich in dieser an. Dadurch ist das primär erzeugte Naphtha-Produkt mit unerwünschten Schwefelverbindungen belastet und somit von minderer Qualität.

Diese Problematik besteht dann in verstärktem Maße, wenn bereits mit Schwefelverbindungen beladenes Methanol aus einer der Hauptwaschstufen für die Vorwäsche in zumindest einer der Vorwaschstufen verwendet wird. In diesen Fällen können sich außer den Methylmercaptanen zusätzliche Mengen an unerwünschten Schwefelverbindungen wie Schwefelwasserstoff und Carbonylsulfid im Naphtha-Produkt anreichern.

Zusammengefasst besteht die Problematik der Anreicherung von Schwefelverbindungen im Naphtha in bekannten Verfahren und Anlagen grundsätzlich, unabhängig davon ob eine oder mehrere Vorwaschstufen verwendet werden, und unabhängig davon ob die Vor- und Hauptwaschstufen in einer einzigen Waschkolonne integriert sind, oder ob diese Stufen als Vor- und Hauptwäscher mit räumlich voneinander getrennte Waschkolonnen ausgestaltet sind.

### Beschreibung der Erfindung

Allgemein ist es eine Aufgabe der vorliegenden Erfindung, die vorgenannten Nachteile des Standes der Technik zu überwinden.

Eine weitere Aufgabe der Erfindung ist die vollständige oder zumindest im Wesentlichen vollständige Entfernung von Schwefelverbindungen aus dem Naphtha-Produkt im Rahmen des durchgeführten Gaswäscheverfahrens. Insbesondere besteht eine Aufgabe der Erfindung somit darin, Schwefelverbindungen bereits während des Gaswäscheverfahrens aus dem Naphtha-Produkt auszuschließen, so dass eine nachgelagerte und damit meist aufwändige Aufarbeitung des Naphtha-Produkts nicht erforderlich ist.

Eine weitere Aufgabe der Erfindung ist die vollständige oder zumindest im Wesentlichen vollständige Entfernung von Schwefelverbindungen aus dem Naphtha-Produkt, um die Schwefel-Ausbeute bei einem der Gaswäsche nachgelagerten Schwefelrückgewinnungsverfahren, insbesondere einem Claus-Prozess, zu erhöhen.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen. Bevorzugte Ausgestaltungen von Bestandteilen einer erfindungsgemäßen Kategorie sind, soweit zutreffend, ebenso bevorzugt für gleichnamige oder entsprechende Bestandteile einer jeweils anderen erfindungsgemäßen Kategorie.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch ein Verfahren zur stufenweisen Abtrennung von Begleitstoffen aus einem Rohsynthesegasstrom zur Erzeugung von Synthesegas, durch Absorption der Begleitstoffe in einem im Gegenstrom zum Rohsynthesegasstrom geführten physikalisch wirkenden Waschmittel in einer Mehrzahl von Waschstufen bei erhöhtem Druck, wobei die Begleitstoffe zumindest Kohlendioxid (CO₂), eine oder mehrere Schwefelverbindungen einer ersten Art, eine oder mehrere Schwefelverbindungen einer zweiten Art, sowie Naphtha umfassen, wobei das Verfahren die folgenden Schritte umfasst, wobei die Verfahrensschritte nicht zwangsläufig in der angegebenen Reihenfolge durchzuführen sind:
a) Absorption von zumindest Naphtha und Schwefelverbindungen der ersten Art in einer Vorwaschstufe, wobei eine zumindest mit Naphtha sowie Schwefelverbindungen der ersten Art beladene Waschmittelfraktion erhalten wird;
b) Vermischen der gemäß Schritt a) erhaltenen beladenen Waschmittelfraktion mit Wasser, wodurch eine Phasentrennung in zwei flüssige Phasen resultiert, wobei eine erste flüssige Phase Wasser und Waschmittel umfasst, und eine zweite flüssige Phase Naphtha und darin gelöste Schwefelverbindungen der ersten Art umfasst;
c) Erhitzen der gemäß Schritt b) erhaltenen zweiten flüssigen Phase, wobei die Schwefelverbindungen der ersten Art entfernt werden und schwefelfreies Naphta erhalten wird;
d) Absorption von Kohlendioxid und Schwefelverbindungen der zweiten Art in zumindest einer der Vorwaschstufe in Gasflussrichtung nachgeschalteten Hauptwaschstufe, wobei zumindest eine mit zumindest Kohlendioxid oder Schwefelverbindungen der zweiten Art beladene Waschmittelfraktion erhalten wird;
e) Regenerieren der gemäß der Schritte a) und d) erhaltenen beladenen Waschmittelfraktionen und Wiederverwendung des regenerierten Waschmittels zur Absorption von Begleitstoffen gemäß der Schritte a) und d),
wobei die Schwefelverbindungen der ersten Art zumindest ein Element aus der Gruppe Alkylmercaptane (R-SH), Kohlenstoffdisulfid (CS₂), Thiophene umfassen,
die Schwefelverbindungen der zweiten Art zumindest ein Element aus der Gruppe Schwefelwasserstoff (H₂S), Carbonylsulfid (COS) umfassen, und das Waschmittel Methanol umfasst.

Das erfindungsgemäße Verfahren zeichnet sich dadurch aus, dass im Rohsynthesegas enthaltenes Naphtha sowie Schwefelverbindungen einer ersten Art zunächst in einer Vorwaschstufe im Waschmittel absorbiert werden. Bei der Vorwaschstufe handelt es sich um die erste Waschstufe, mit welcher der zu reinigende Rohsynthesegasstrom in stofflichen Austausch tritt. Die bei der Absorption in der Vorwaschstufe erhaltene Waschmittelfraktion, welche mit Naphtha sowie einer oder mehrerer Schwefelverbindungen der ersten Art beladenes Waschmittel enthält, wird anschließend in einer geeigneten Vorrichtung, beispielsweise einem Extraktionsapparat, mit Wasser vermischt. Dort findet eine Phasentrennung in zwei flüssige Phasen statt, da das relativ unpolare und hydrophobe Naphtha durch den Kontakt mit Wasser nicht mehr im relativ polaren und hydrophilen Waschmittel gelöst bleibt. Die bei der Phasentrennung gemäß Schritt b) erzeugten Phasen bestehen somit im Wesentlichen aus einer hydrophilen Waschmittel/Wasser-Phase sowie einer hydrophoben Naphtha-Phase. Die zweite (hydrophobe) Phase wird von der ersten (hydrophilen) Phase abgetrennt. Aufgrund der guten Löslichkeit der Schwefelverbindungen der ersten Art in Naphtha verbleibt ein signifikanter Anteil dieser Schwefelverbindungen in der abgetrennten hydrophoben Naphtha-Phase. Daraus werden diese anschließend durch Erhitzen ausgetrieben, so dass ein schwefelfreies Naphtha erhalten wird. Da in Rohsynthesegas enthaltene Schwefelverbindungen in der Regel einen niedrigen Siedepunkt und hohen Dampfdruck aufweisen, können diese durch Erhitzen aus dem Naphtha leicht entfernt werden. Es wurde überraschend festgestellt, dass selbst Schwefelverbindungen mit einem relativ hohen Siedepunkt, wie Thiophen, durch einfaches Erhitzen aus Naphtha entfernt werden können.

Vorzugsweise wird der Schritt des Erhitzens (Schritt c)) bei einer Temperatur von 40 bis 250 °C durchgeführt, bevorzugt bei einer Temperatur von 70 bis 150 °C und besonders bevorzugt bei einer Temperatur von 90 bis 120 °C.

Durch die erfindungsgemäße Art der Verfahrensführung wird unmittelbar eine schwefelfreies Naphtha als Nebenerzeugnis des Gaswäscheverfahrens erhalten, ohne dass das Naphtha nach Ausschleusen aus der Gaswäsche einem aufwändigen Reinigungsverfahren unterzogen werden müsste.

Weitere Begleitstoffe, insbesondere Schwefelverbindungen der zweiten Art sowie Kohlendioxid, werden in einer oder mehreren der Vorwaschstufe nachgeschalteten Hauptwaschstufen gemäß Schritt d) aus dem Rohsynthesegas entfernt. Sämtliche im Gaswäscheverfahren erhaltenen beladenen Waschmittelfraktionen werden gemäß Schritt e) einer Regeneration unterzogen und anschließend zur erneuten Absorption von Begleitstoffen (Schritte a) und d) wiederverwendet.

Die Vorwaschstufe kann, sofern zweckmäßig, mehrere Teilvorwaschstufen umfassen. In einem Beispiel werden in einer ersten Teilvorwaschstufe hauptsächlich die Naphtha-Verbindungen entfernt. In einer zweiten Teilvorwaschstufe werden hauptsächlich die Schwefelverbindungen der ersten Art entfernt, wobei das dabei erhaltene Waschmittel teilweise für die Entfernung von Naphtha in der ersten Teilvorwaschstufe verwendet werden kann. Dadurch weist die aus der ersten Teilvorwaschstufe ausgeschleuste Waschmittelfraktion sowohl Schwefelverbindungen der ersten Art als auch Naphtha auf.

Die aus der Vorwaschstufe ausgeschleuste Waschmittelfraktion weist vorzugsweise Alkylmercaptane und/oder Thiophen auf, wobei je nach Verfahrensführung nicht ausgeschlossen ist, dass auch die aus der Vorwaschstufe ausgeschleuste Waschmittelfraktion Schwefelverbindungen der zweiten Art, beispielsweise Schwefelwasserstoff, aufweist. Das ist beispielsweise dann der Fall, wenn für die Vorwaschstufe aus verfahrensökonomischen Gründen ein bereits mit Schwefelwasserstoff beladenes Waschmittel verwendet wird. Auch ist es möglich, dass Schwefelverbindungen der zweiten Art in der Vorwaschstufe zusammen mit Schwefelverbindungen der ersten Art co-absorbiert werden. Erfindungsgemäß werden diese Schwefelverbindungen der zweiten Art gemäß Schritt c) ebenfalls aus dem Naphtha ausgetrieben.

Die aus einer Hauptwaschstufe ausgeschleuste Waschmittelfraktion weist vorzugsweise Schwefelwasserstoff und/oder Carbonylsulfid sowie optional Kohlendioxid auf. Auch in diesem Fall kann ja nach Verfahrensführung nicht ausgeschlossen werden, dass Waschmittelfraktionen der Hauptwaschstufen Schwefelverbindungen der ersten Art enthalten. Das ist beispielsweise dann der Fall, wenn für eine der Hauptwaschstufen aus verfahrensökonomischen Gründen ein bereits mit Alkylmercaptanen beladenes Waschmittel verwendet wird.

Beispiele für großtechnische Gaswäscheverfahren, in welchen Methanol als Waschmittel zum Einsatz kommt, sind das Standard-Rectisol-Verfahren sowie das selektive Rectisol-Verfahren.

Eine bevorzugte Ausführungsform des erfindungsgemäßen Verfahrens ist dadurch gekennzeichnet, dass die mit Naphtha sowie Schwefelverbindungen der ersten Art beladene Waschmittelfraktion einer Druckentspannungsstufe zur Rückgewinnung von Wertgasen, insbesondere von Wasserstoff (H₂) und Kohlenmonoxid (CO), zugeführt wird.

Vorzugsweise werden im Waschmittel co-absorbierte Wertgase durch Druckentspannung aus dem Waschmittel ausgetrieben, bevor mit Schwefelverbindungen der ersten Art und Naphtha beladenes Waschmittel zur Phasentrennung mit Wasser versetzt wird. Dadurch wird die Synthesegasausbeute des gesamten Prozesses erhöht. Die ausgetriebenen Wertgase werden auf Absorptionsdruck rückverdichtet und mit dem Rohsynthesegasstrom zusammengeführt.

Eine bevorzugte Ausführungsform des erfindungsgemäßen Verfahrens ist dadurch gekennzeichnet, dass die erste flüssige Phase einem thermischen Trennverfahren zur Abtrennung von Naphtha-Rückständen aus der ersten flüssigen Phase unterzogen wird, wobei Naphtha und ein Wasser-Waschmittel-Gemisch als Produkte des thermischen Trennverfahrens erhalten werden.

Je nach Polarität und dadurch eher hydrophilem oder hydrophobem Charakter des verwendeten Waschmittels kann sich Naphtha auch in der ersten flüssigen Phase, dem Waschmittel/Wasser-Gemisch, wiederfinden. Vorzugsweise wird dieses Naphtha zur Rückgewinnung in einem thermischen Trennverfahren von Wasser und dem verwendeten Waschmittel abgetrennt. Vorzugsweise handelt es sich bei dem verwendeten thermischen Trennverfahren um eine Rektifikation. Insbesondere bei der Verwendung von Methanol als Waschmittel finden sich signifikante Mengen Naphtha in der ersten flüssigen Phase wieder, wie Untersuchungen gezeigt haben. Die thermische Abtrennung von Naphtha aus der ersten flüssigen Phase kommt daher in besonders vorteilhafter Weise bei allen Gaswäscheverfahren zum Einsatz, welche Methanol als Waschmittel verwenden.

Dabei wird das aus der ersten flüssigen Phase thermisch abgetrennte Naphtha vorzugsweise zu Schritt b) zurückgeführt.

Es hat sich als besonders vorteilhaft erwiesen, das von der ersten flüssigen Phase thermisch abgetrennte Naphtha in den Kreislauf zurückzuführen, das heißt zusammen mit dem Waschmittelstrom aus der Vorwaschstufe (erneut) mit Wasser zu versetzen. Dies hat sich als vorteilhaft gegenüber einer alternativen Verfahrensführung herausgestellt, das aus der ersten flüssigen Phase thermisch abgetrennte Naphtha der zweiten flüssigen Phase zuzuführen. Das aus der ersten flüssigen Phase thermisch abgetrennte Naphtha kann noch Spuren an Waschmittel und Wasser aufweisen. Daher wird eine höhere Reinheit des zu erzeugenden Naphtha-Produkts sowie eine verbesserte Rückgewinnung von Naphtha sowie Waschmittel und Wasser erzielt, wenn das ursprünglich aus der ersten flüssigen Phase abgetrennte Naphtha-Produkt zu Schritt b) zurückgeführt wird. Bei der anschließenden Phasentrennung gemäß Schritt c) in eine hydrophobe und hydrophile Phase lässt sich das Naphtha mit hoher Reinheit als hydrophobe Phase abtrennen.

Vorzugsweise wird das thermisch abgetrennte Wasser-Waschmittel-Gemisch einem weiteren thermischen Trennverfahren unterzogen, wobei Wasser und Waschmittel als Produkte des thermischen Trennverfahrens erhalten werden, und das erhaltene Waschmittel heiß regeneriert und anschließend zur Absorption von Begleitstoffen gemäß der Schritte a) und/oder d) wiederverwendet wird. Gleichzeitig kann das thermisch abgetrennte Wasser für die Erzeugung der Phasentrennung gemäß Schritt b) verwendet werden. Somit können sämtliche im Verfahren verwendeten Lösungsmittel in den Kreislauf zurückgeführt werden, ohne dass eine externe Zuführung von Lösungsmitteln erforderlich ist. Vorzugsweise handelt es sich bei dem thermischen Trennverfahren um eine Destillation, besonders bevorzugt eine Rektifikation. Je nach Verfahrensführung ist eine vollständige Trennung von Waschmittel und Wasser nicht erforderlich, je nachdem welche Polarität das verwendete Waschmittel aufweist. Gegebenenfalls kann die Phasentrennung gemäß Schritt b) durch die Zugabe von Wasser erfolgen, welches noch Restmengen an Waschmittel enthält.

Eine bevorzugte Ausführungsform des erfindungsgemäßen Verfahrens ist dadurch gekennzeichnet, dass die Schwefelverbindungen der ersten Art aus der zweiten flüssigen Phase durch Erhitzen in einer Stripp-Kolonne entfernt werden.

Es hat sich als besonders einfach und vorteilhaft erwiesen, das Naphtha in einer einfachen Stripp-Kolonne beispielsweise mit Hilfe eines in die Kolonne integrierten Wärmeaustauschers ("Aufkochers") zu erhitzen, wobei die Schwefelverbindungen der ersten Art ausgetrieben (ausgestrippt) werden. Wie sich gezeigt hat, funktioniert diese Vorgehensweise für die meisten Stoffzusammensetzungen in vorteilhafter und überraschender Weise ohne Zugabe eines Hilfsgases (Stripp-Gases). Ein Hilfsgas müsste anschließend aufwändig aus dem schwefelgashaltigen Strom entfernt werden, da es bei der Weiterverarbeitung der schwefelhaltigen Gase im Rahmen der Schwefelrückgewinnung stört.

Eine bevorzugte Ausführungsform des erfindungsgemäßen Verfahrens ist dadurch gekennzeichnet, dass die Schwefelverbindungen der ersten Art aus der zweiten flüssigen Phase durch Einleiten von Sattdampf in die zweite flüssige Phase entfernt, und das schwefelfreie Naphtha anschließend einem weiteren Behandlungsschritt zur Abtrennung von Wasser unterzogen. Mit Hilfe von Sattdampf können auch schwerer flüchtige, höher siedende Schwefelverbindungen vollständig aus dem Naphtha entfernt werden. Die Verwendung von Sattdampf kann insbesondere dann erforderlich werden, wenn sich größere Mengen an längerkettigen Alkylmercaptanen, beispielsweise mit Ketten von vier oder mehr Kohlenstoffatomen, sowie heterocyclische schwefelhaltige Arylverbindungen, zum Beispiel Thiophen und seine Derivate, im Naphtha angereichert haben. Auch wenn diese Vorgehensweise einen weiteren Reinigungsschritt des Naphtha erfordert, so wird durch die Verwendung von Sattdampf trotzdem die vollständige Entfernung aller gängigen in Rohsynthesegasen vorkommenden schwefelhaltigen Begleitstoffe sichergestellt.

Eine bevorzugte Ausführungsform des erfindungsgemäßen Verfahrens ist dadurch gekennzeichnet, dass die aus der zweiten flüssigen Phase durch Erhitzen entfernten Schwefelverbindungen der ersten Art einer Schwefelrückgewinnungsanlage zugeführt werden. Vorzugsweise handelt es sich bei der Schwefelrückgewinnungsanlage um eine Anlage, in welcher das dem Fachmann bekannte Claus-Verfahren verwendet wird. Zweckmäßigerweise werden die Schwefelverbindungen der ersten Art mit den ebenfalls im Rahmen des Gaswäscheverfahrens anfallenden Schwefelverbindungen zweiter Art zusammengeführt und der Schwefelrückgewinnung zugeführt.

Die Aufgaben der Erfindung werden ferner zumindest teilweise gelöst durch eine Anlage zur stufenweisen Abtrennung von Begleitstoffen aus einem Rohsynthesegasstrom zur Erzeugung von Synthesegas, durch Absorption der Begleitstoffe in einem im Gegenstrom zum Rohsynthesegasstrom geführten physikalisch wirkenden Waschmittel in einer Mehrzahl von Waschstufen bei erhöhtem Druck, wobei die Begleitstoffe zumindest Kohlendioxid (CO₂), eine oder mehrere Schwefelverbindungen einer ersten Art, eine oder mehrere Schwefelverbindungen einer zweiten Art, sowie Naphtha umfassen,
wobei die Schwefelverbindungen der ersten Art zumindest ein Element aus der Gruppe Alkylmercaptane (R-SH), Kohlenstoffdisulfid (CS₂), Thiophene umfassen, die Schwefelverbindungen der zweiten Art zumindest ein Element aus der Gruppe Schwefelwasserstoff (H₂S), Carbonylsulfid (COS) umfassen, und das Waschmittel Methanol umfasst,
wobei die Anlage folgende Komponenten aufweist:
   a) Einen Vorwäscher zur Absorption von zumindest Naphtha und Schwefelverbindungen der ersten Art im Waschmittel, wodurch eine zumindest mit Naphtha sowie Schwefelverbindungen der ersten Art beladene Waschmittelfraktion im Vorwäscher erhältlich ist;
   b) eine Extraktionsvorrichtung zum Vermischen der im Vorwäscher erhältlichen beladenen Waschmittelfraktion mit Wasser, zum Erzeugen einer Phasentrennung in zwei flüssige Phasen, wobei eine erste flüssige Phase umfassend Wasser und Waschmittel erhältlich ist, und eine zweite flüssige Phase umfassend Naphtha und darin gelöste Schwefelverbindungen der ersten Art erhältlich ist;
   c) eine der Extraktionsvorrichtung nachgeschaltete Kolonne, in welcher die zweite flüssige Phase erhitzbar ist und die Schwefelverbindungen der ersten Art dadurch entfernbar sind, wodurch in der Kolonne schwefelfreies Naphtha erhältlich ist;
   d) einen dem Vorwäscher in Gasflussrichtung nachgeschalteten Hauptwäscher zur Absorption von Kohlendioxid und Schwefelverbindungen der zweiten Art, wobei der Hauptwäscher zumindest eine Hauptwaschstufe umfasst, in der zumindest eine mit zumindest Kohlendioxid oder Schwefelverbindungen der zweiten Art beladene Waschmittelfraktion erhältlich ist;
   e) ein Regenerationssystem, in dem die im Vorwäscher und Hauptwäscher erhältlichen Waschmittelfraktionen für die erneute Absorption von Begleitstoffen im Vorwäscher und Hauptwäscher regenerierbar sind.

Die Aufgaben der Erfindung werden ferner zumindest teilweise gelöst durch die Verwendung des erfindungsgemäßen Verfahrens oder der erfindungsgemäßen Anlage zur Behandlung eines Rohsynthesegases aus einer Festbettdruckvergasung eines kohlenstoffhaltigen Einsatzstoffes.

Insbesondere Rohsynthesegase aus der Festbettdruckvergasung kohlenstoffhaltiger Einsatzstoffe weisen einen großen Anteil Schwefelverbindungen und Naphtha auf, wodurch das erfindungsgemäße Verfahren oder die erfindungsgemäße Anlage bei der Behandlung solcher Rohsynthesegase in vorteilhafter Weise zum Einsatz kommen. Dabei umfasst der kohlenstoffhaltige Einsatzstoff zumindest ein Element aus der Gruppe Kohle, Petrolkoks.

### Rohsynthesegas

Das Rohsynthesegas weist zumindest Wasserstoff (H₂) sowie zumindest ein Kohlenstoffoxid und unerwünschte Begleitstoffe auf. Unter dem Begriff "Kohlenstoffoxide" werden die Verbindungen Kohlendioxid (CO₂) sowie Kohlenmonoxid (CO) zusammengefasst. Üblicherweise weist das Rohsynthesegas ein Gemisch aus Kohlendioxid und Kohlenmonoxid auf. In bestimmten Fällen, je nach Anwendungsfall, kann das Rohsynthesegas ausschließlich oder nahezu ausschließlich Kohlendioxid enthalten. Solche Rohsynthesegas-Zusammensetzungen können beispielsweise durch eine Wassergas-Shift Reaktion erhalten werden, durch die der Wasserstoffanteil im Rohsynthesegas erhöht wird. Dabei wird auch Kohlenmonoxid zu Kohlendioxid umgesetzt, wodurch sich der Kohlenmonoxid-Anteil verringert.

Das Rohsynthesegas kann aus jeder dem Fachmann bekannten Quelle stammen. In einem bevorzugten Beispiel stammt das Rohsynthesegas aus einem Kohlevergasungsverfahren, vorzugsweise aus einem Festbettdruckvergasungsverfahren. In einem weiteren Beispiel stammt das Rohsynthesegas aus einem Reformierungsverfahren. Der Reformierungsprozess kann einen oder mehrere Schritte wie Dampfreformierung, partielle Oxidation oder autotherme Reformierung aufweisen.

Das Rohsynthesegas kann, unabhängig von der Quelle aus der es stammt, bei einer Temperatur zwischen 400 °C und 1200 °C und/oder bei einem Druck zwischen 10 und 60 bar erzeugt werden. Das Einsatzgas kann außer den vorgenannten Bestandteilen auch unterschiedliche Mengen inerter Bestandteile wie Methan oder Stickstoff enthalten.

Angaben in bar in Zusammenhang mit Gegenständen der Erfindung sind als Absolutdruck in bar zu verstehen.

### Synthesegas

Das Synthesegas ist ein von unerwünschten Begleitstoffen befreites Rohsynthesegas. Je nach Anforderung ist es nicht unbedingt erforderlich, unerwünschte Begleitstoff vollständig aus dem Rohsynthesegas zu entfernen, um spezifikationsgerechtes Synthesegas zu erhalten. Insbesondere ist die vollständige Entfernung von Kohlendioxid nicht in jedem Fall erwünscht, da beispielsweise bei der Methanolsynthese bestimmte Restmengen an Kohlendioxid die Kinetik der katalytischen Umsetzung begünstigen.

### Begleitstoff

Im Rohsynthesegas vorhandene Begleitstoffe, auch unerwünschte Begleitstoffe, sind beispielsweise Kohlendioxid, Schwefelverbindungen wie Schwefelwasserstoff, Carbonylsulfid, Alkylmercaptane, insbesondere Methylmercaptan, Kohlenstoffdisulfid sowie aromatische heterocyclische Schwefelverbindungen, insbesondere Thiophen. Insbesondere Alkylmercaptane und aromatische heterocyclische Schwefelverbindungen treten bei Rohsynthesegasen aus Kohlevergasung auf. Weitere im Rohsynthesegas möglicherweise vorhandene Begleitstoffe sind Verbindungen wie Ammoniak und Cyanwasserstoff sowie Metallcarbonyle. Bei letzteren handelt es sich um Metallkomplexe, in welchen Kohlenmonoxid koordinativ an ein zentrales Metallatom gebunden ist. Metallcarbonyle können insbesondere aufgrund ihrer Neigung, mit Schwefelwasserstoff zu reagieren und schwerlösliche Metallsulfide zu bilden, zu Problemen führen. Zu den in industriellen Gaswäscheverfahren auftretenden Metallcarbonylen zählen insbesondere Nickel-Carbonyle sowie Eisen-Carbonyle.

Weitere mögliche Begleitstoffe sind bei Normaldruck gasförmige sowie leichtsiedende und höhersiedende aliphatische, alicylische und aromatische Kohlenwasserstoffverbindungen. Zu den aromatischen Kohlenwasserstoffverbindungen zählen insbesondere Benzol, Toluol sowie Xylole (ortho-, meta- und para-Xylol), sowie Naphthalin. Zu den gasförmigen sowie leicht- und höhersiedenden aliphatischen und alicyclischen Kohlenwasserstoffen zählen insbesondere die homologe Reihe der (Cyclo-)Alkane, sowie in geringem Umfang Alkene und Alkine, beispielsweise mit einer Zahl von 1 bis 12 Kohlenstoffatomen, insbesondere mit einer Zahl von 1 bis 6 Kohlenstoffatomen.

### Schwefelverbindungen erster und zweiter Art

Erfindungsgemäß wird unter einer "Schwefelverbindung erster Art" eine Schwefelverbindung verstanden, die sich in Bezug auf die gewählten Absorptionsparameter leichter entfernen lässt als eine "Schwefelverbindung zweiter Art". Mit anderen Worten weist eine Schwefelverbindung erster Art in Bezug auf das verwendete Waschmittel und die vorherrschende Temperatur einen höheren Absorptionskoeffizienten auf als eine Schwefelverbindung zweiter Art. Aus diesem Grund werden Schwefelverbindungen erster Art erfindungsgemäß vorzugsweise im Rahmen einer Vorwaschstufe entfernt, während Schwefelverbindungen zweiter Art erfindungsgemäß vorzugsweise durch eine oder mehrere Hauptwaschstufen entfernt werden. Dabei sind die Hauptwaschstufe oder die Mehrzahl von Hauptwaschstufen der Vorwaschstufe in Gasflussrichtung gesehen nachgeschaltet. Schwefelverbindungen zweiter Art werden im Rahmen der Vorwaschstufe nicht oder nur wenig absorbiert. Die Hauptmenge einer Schwefelverbindung zweiter Art gelangt in die Hauptwaschstufe oder eine der Hauptwaschstufen und wird dort durch das betreffende Waschmittel absorbiert. Schwefelverbindungen der zweiten Art können auch dann in der Vorwaschstufe auftreten, wenn Schwefelverbindungen zweiter Art aufweisendes Waschmittel in der Vorwaschstufe verwendet wird. In diesem Fall werden durch das erfindungsgemäße Verfahren nicht nur Schwefelverbindungen erster Art, sondern ferner auch Schwefelverbindungen zweiter Art aus dem Naphtha entfernt. Weiterhin können Schwefelverbindungen zweiter Art in der Vorwaschstufe co-absorbiert werden. Vice versa können auch Schwefelverbindungen der ersten Art in einer Hauptwaschstufe co-absorbiert werden.

In einem Beispiel handelt es sich bei Schwefelverbindungen erster Art, in Bezug auf Methanol als Waschmittel, um Alkylmercaptane sowie heterocyclische aromatische Schwefelverbindungen. Beispiele für Alklymercaptane sind Methan-, Ethan- sowie Propanthiol. Ein Beispiel für eine heterocyclische aromatische Schwefelverbindung ist Thiophen.

In einem Beispiel handelt es sich bei Schwefelverbindungen zweiter Art, in Bezug auf Methanol als Waschmittel, um Schwefelwasserstoff oder Carbonylsulfid.

### Erhöhter Druck

Die Absorption der unerwünschten Begleitstoffe im Waschmittel erfolgt unter erhöhtem Druck, da der Absorptionskoeffizient mit steigendem Druck größer wird. Die Absorption erfolgt daher üblicherweise bei Drücken zwischen 20 und 100 bar.

### Regenerieren

Zur Entfernung der unerwünschten Begleitstoffe aus dem Waschmittel, zur Regenerierung des Waschmittels, wird der Druck üblicherweise auf 1,5 bis 70 bar abgesenkt, je nachdem ob es sich um eine Hochdruckregenerierung (20 bis 70 bar), Mitteldruckregenerierung (15 bis 40 bar) oder Niederdruckregenerierung (0 bis 15 bar, vorzugsweise 1,5 bis 15 bar) handelt. In einem Beispiel sind entsprechende Regenerierungskolonnen kaskadisch hintereinander angeordnet, wobei der Druck von Kolonne zu Kolonne kleiner wird.

In einer Regenerierungskolonne können die unerwünschten Begleitstoffe entweder ausschließlich durch Druckabsenkung (Flashen), durch Druckabsenkung in Verbindung mit einem Strippgas (Strippen), oder durch Heißregenerierung entfernt werden. Ein Beispiel für eine geeignetes Strippgas ist Stickstoff. Bei der Heißregenerierung wird üblicherweise der Eigendampf des Waschmittels, beispielsweise Methanol, als Strippgas genutzt.

### Physikalisch wirkendes Waschmittel

In einem physikalisch wirkenden Waschmittel wird die Löslichkeit des betreffenden Gases, beispielsweise des unerwünschten Begleitstoffes, durch physikalische Wechselwirkungen bewirkt.

Die Aufnahme der unerwünschten Begleitstoffe erfolgt im Falle physikalisch wirkender Waschmittel vorzugsweise durch kalte, unter Umgebungstemperatur abgekühlte Waschmittel als Absorbens, da der Absorptionskoeffizient für die unerwünschten Bestandteile mit sinkender Temperatur des Waschmittels größer wird. Dabei erfolgt in einer Absorptionskolonne, auch als Waschkolonne bezeichnet, ein intensiver Stoffaustausch zwischen dem Rohsynthesegas und dem Waschmittel. Die Absorptionskolonne, in welcher sich das Rohsynthesegas und das Waschmittel im Gegenstrom zueinander bewegen, kann mit Füllkörpern oder Böden zur Verbesserung des Stoffaustauschs versehen sein.

### Naphtha

Naphtha fällt im Rahmen des erfindungsgemäßen Verfahrens als Nebenprodukt oder Nebenerzeugnis der Gaswäsche an. Grundsätzlich handelt es sich dabei um ein Substanzgemisch variierender Zusammensetzung, welches als Rohnaphtha direkt oder nach entsprechender Aufarbeitung als Treibstoff (beispielsweise Benzin) genutzt werden kann. Naphtha weist insbesondere niedrigsiedende aliphatische und alicyclische Kohlenwasserstoffe auf, beispielsweise Kohlenwasserstoffe mit einem Siedepunkt (bei Normaldruck) von 30 °C bis 150 °C. Gegebenenfalls kann Naphtha zusätzlich höhersiedende aliphatische und alicyclische Kohlenwasserstoffe enthalten, mit einem Siedepunkt (bei Normaldruck) von 120 °C bis 240 °C. In Naphtha beispielsweise enthaltene niedrigsiedende Kohlenwasserstoffe sind insbesondere gesättigte Kohlenwasserstoffe (Alkane und Cycloalkane) mit 5 bis 7 Kohlenstoffatomen. In Naphtha beispielsweise enthaltene höhersiedende Kohlenwasserstoffe sind insbesondere gesättigte Kohlenwasserstoffe (Alkane und Cycloalkane) mit 6 bis 12 Kohlenstoffatomen. Daneben können auch in geringem Umfang ungesättigte aliphatische und alicyclische Kohlenwasserstoffe auftreten. Ferner enthält Naphtha aromatische Kohlenwasserstoffe mit 6 bis 10 Kohlenstoffatomen, beispielsweise Benzol, Toluol sowie Xylole, oder Naphthalin.

### Schwefelfreies Naphtha

Schwefelfreies Naphtha, wie durch das erfindungsgemäße Verfahren herstellbar, enthält entweder keine schwefelhaltigen Verbindungen oder ist im Wesentlichen schwefelfrei. Letzteres kann alternativ als schwefelarmes Naphtha bezeichnet werden. In diesem Fall enthält das als Nebenerzeugnis erhältliche Naphtha Schwefelverbindungen in einer maximalen Konzentration von 0,1 mol-%, bevorzugt maximal 0,01 mol-%, besonders bevorzugt maximal 0,001 mol-% und weiter bevorzugt maximal 0,0001 mol-%. Vollständig schwefelfreies Naphtha ist durch das erfindungsgemäße Verfahren dann und nur in seltenen Fällen nicht erhältlich, wenn sich im Verlaufe des Gaswäscheverfahrens hochsiedende Schwefelverbindungen im Naphtha anreichern, die durch Erhitzen nicht oder nicht vollständig entfernbar sind. Ob solche hochsiedenden Schwefelverbindungen Probleme bereiten, hängt von der Art und Zusammensetzung des bei der Rohsynthesegaserzeugung verwendeten Einsatzstoffes, beispielsweise der verwendeten Kohle, ab.

### Kohle

Unter Kohle wird eine Kategorie von festen, fossilen, kohlenstoffhaltigen Rohstoffen verstanden, die durch Carbonisierung von Pflanzenresten entstehen. In diese Kategorie werden für die Zwecke der vorliegenden Anmeldung Vertreter mit unterschiedlichem Inkohlungsgrad einbezogen, der von der Braunkohle (niedriger Inkohlungsgrad) bis zum Anthrazit (hoher Inkohlungsgrad) reicht. In noch weiterer Auslegung können auch Vertreter mit noch kleinerem Inkohlungsgrad, beispielsweise Torf, unter diesen Oberbegriff gefasst werden; sie bilden somit einen fließenden Übergang zu der Nachbarkategorie Biomasse. Kennzeichnend ist für alle Vertreter dieser Kategorie unter anderem ihr mehr oder weniger ausgeprägter Schwefelgehalt.

### Ausführungsbeispiel

Die Erfindung wird im Folgenden durch eine Zeichnung und ein Ausführungsbeispiel genauer dargestellt, wobei die Zeichnung und das Ausführungsbeispiel keine Beschränkung der Erfindung bedeuten. Die Zeichnung ist, sofern nicht anders angegeben, nicht maßstabsgetreu.

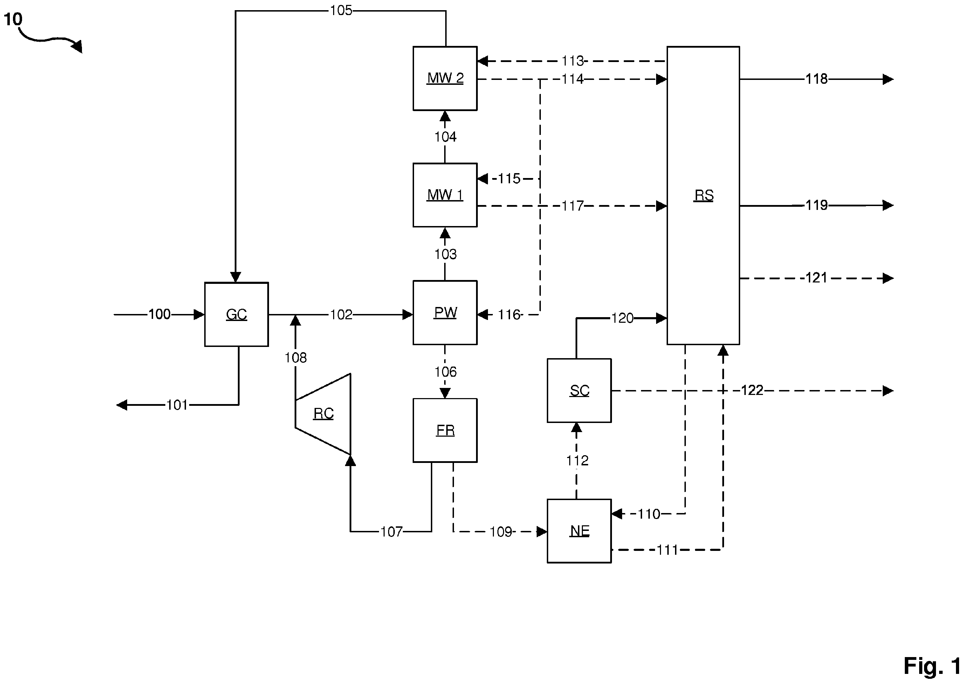

Es zeigt
- Figur 1: ein Verfahrensfließbild des erfindungsgemäßen Verfahrens oder der erfindungsgemäßen Anlage gemäß einer Ausführungsform mit Methanol als Waschmittel.

In Figur 1 sind Ströme von Gasen als durchgezogene Linien dargestellt, wohingegen Ströme von Flüssigkeiten als gestrichelte Linien dargestellt sind.

Im Ausführungsbeispiel gemäß Figur 1 wird ein Rohsynthesegas 100 (Zusammensetzung in mol-%: 36% CO₂; 12,2% CO; 39,2% H₂; 11,3% CH₄; 0,4% Ethan; 0,1 % Propan; 0,1 % n-Butan 0,1%; 0,2% N₂+Ar; 0,3 % H₂S/COS/Mercaptane; 0,2 % Naphtha) mit einem Volumenstrom von 600 kNm³/h zugeführt, in der Gaskühlung GC auf eine Temperatur von minus 10 °C (- 10 °C) gekühlt und bei einem Absorptionsdruck von 45 bar in Vorwaschstufe PW eingeschleust. In der Vorwaschstufe PW wird das Rohsynthesegas mit tiefkaltem Methanol (Methanol-Temperatur: minus 30 °C) aus Methanol-Strom 116 behandelt. Methanol-Strom 116 wird als Teilstrom aus Methanol-Strom 114 abgezweigt und enthält bereits aus der zweiten Hauptwaschstufe MW 2 absorbiertes Kohlendioxid (CO₂). In der Vorwaschstufe PW wird das Rohsynthesegas von Naphtha-Verbindungen sowie Alkylmercaptanen (Schwefelverbindungen erster Art im Sinne der Erfindung) befreit. In der Vorwaschstufe PW werden durch Methanol 116 auch in geringem Maße Wertgase (Wasserstoff sowie Kohlenmonoxid) sowie Schwefelwasserstoff (H₂S) aus dem Rohsynthesegas 102 co-absorbiert.

Mit vorgenannten Stoffen beladenes Methanol 106 wird aus der Vorwaschstufe ausgeschleust und zunächst in Flash-Regenerationsstufe FR eingeschleust, wobei eine Druckabsenkung auf 7 bar erfolgt. Durch die Druckabsenkung gasen im Wesentlichen die Wertgase Wasserstoff sowie Kohlenmonoxid aus, welche als recycelte Wertgase 107 aus der Flash-Regenerationsstufe FR ausgeschleust werden. Wertgase 107 werden anschließend einer Rückverdichtung RC unterzogen und dadurch auf den ursprünglichen Absorptionsdruck von 45 bar rückverdichtet. Rückverdichtung RC ist als ein- oder mehrstufiger Gaskompressor ausgestaltet. Die auf Absorptionsdruck rückverdichteten Wertgase 108 werden dem gekühlten (Haupt-)Rohsynthesegasstrom 102 zugeführt.

Der von Naphtha-Verbindungen sowie Alkylmercaptanen befreite Rohsynthesegasstrom 103 wird aus der Vorwaschstufe PW abgezogen und in die erste Hauptwaschstufe MW 1 eingeschleust. In der Hauptwaschstufe MW 1 wird das Rohsynthesegas 103 mit Methanol 115 behandelt, welches als Teilstrom aus Methanol-Strom 114 abgezweigt wurde und bereits in der zweiten Hauptwaschstufe MW 2 absorbiertes Kohlendioxid (CO₂) enthält. In der ersten Hauptwaschstufe MW 1 wird Rohsynthesegas 103 im Wesentlichen von Schwefelwasserstoff (H₂S) sowie Carbonylsulfid (COS) befreit. Im Wesentlichen noch Kohlendioxid als unerwünschten Bestandteil aufweisendes Rohsynthesegas 104 wird anschließend aus der ersten Hauptwaschstufe MW 1 abgezogen und in der zweiten Hauptwaschstufe MW 2 zur Absorption von Kohlendioxid mit regeneriertem Methanol 113 behandelt. Anschließend wird das behandelte Rohsynthesegas als Synthesegas aus dem Verfahren 10 bzw. der Anlage 10 ausgeleitet, wobei es in der Gaskühlung GC zur Abkühlung des Rohsynthesegases 100 im indirekten Wärmetausch genutzt wird.

Mit Kohlendioxid beladenes Methanol 114 sowie mit Schwefelwasserstoff und Carbonylsulfid beladenes Methanol 117 werden in Regenerationssystem RS von den vorgenannten absorbierten Bestandteilen befreit. Regenerationssystem RS umfasst zumindest mehrere als Kaskade angeordnete Flash-Regenerationsstufen, einen Heißregenerator, gegebenenfalls einen Reabsorber sowie zumindest eine Rektifikationskolonne zur Methanol/Wasser-Trennung. Diese Komponenten sind hier zum Zwecke der Vereinfachung nicht im Einzelnen dargestellt. Durch das Regenerationssystem RS werden schwefelhaltiges Sauergas 119 erzeugt, welches zumindest Schwefelwasserstoff sowie Carbonylsulfid aufweist, sowie Kohlendioxid 118, Wasser 121 und regeneriertes Methanol 113, welches zur erneuten Absorption von unerwünschten Begleitstoffen im Rohsynthesegas 102 über Hauptwaschstufe MW 2 in die Anlage 10 zurückgeführt wird.

Mit im Wesentlichen Naphtha-Verbindungen sowie Alkylmercaptanen und co-absorbiertem Schwefelwasserstoff beladenes Methanol 109 wird aus der Flash-Regenerationsstufe FR abgezogen und in eine Extraktionsvorrichtung zur Naphtha-Extraktion NE eingeschleust. Zur Naphtha-Extraktion NE wird dem beladenen Methanol 109 ein Wasser/Methanol-Gemisch, welches im Regenerationssystem RS erzeugt wurde und hauptsächlich Wasser enthält, zugesetzt. Dadurch findet eine Flüssig-Flüssig-Phasentrennung in Naphtha und ein Methanol/Wasser-Gemisch 111 statt. Das Methanol/Wasser-Gemisch 111 wird abgetrennt und zur Methanol/WasserTrennung in das Regenerationssystem RS eingeschleust. Gegebenenfalls werden Naphtha-Reste aus dem Methanol/Wasser-Gemisch 111 durch Destillation entfernt und zur Naphtha-Extraktion NE zurückgeführt (nicht gezeigt).

Das aus der Naphtha-Extraktion ausgeschleuste Naphtha-Produkt 112 enthält 1,72 mol-% Schwefelwasserstoff, 4 ppmv Carbonylsulfid sowie 0,02 mol-% Methanthiol (Methylmercaptan). Es wird in die Strippkolonne SC überführt und dort auf eine Temperatur von 109 °C erhitzt. Abgestrippte schwefelhaltige Gase 120 werden im Regenerationssystem angereichert und schwefelhaltigen Gasen 119 zugeführt oder direkt einer Schwefelrückgewinnungsanlage, beispielsweise einer Claus-Anlage, zugeführt. Das von schwefelhaltigen Gasen befreite Naphtha-Produkt 122 wird aus der Strippkolonne abgezogen. Es enthält nur noch Spuren von Schwefelwasserstoff, Carbonylsulfid und Methylmercaptan (jeweils weniger als 1 ppm).

### Bezugszeichenliste

- GC: Gaskühlung
- PW: Vorwaschstufe
- MW 1: Erste Hauptwaschstufe
- MW 2: Zweite Hauptwaschstufe
- RC: Rückverdichtung
- FR: Flash-Regenerationsstufe
- NE: Naphtha-Extraktion
- RS: Regenerationssystem
- SC: Strippkolonne

- 10: Anlage, Verfahren
- 100: Rohsynthesegas
- 101: Synthesegas
- 102: Gekühltes Rohsynthesegas
- 103: Rohsynthesegas
- 104: Rohsynthesegas
- 105: Synthesegas
- 106: Beladenes Methanol (Wertgase, Alkylmercaptane und Naphtha)
- 107: Wertgase
- 108: Wertgase
- 109: Beladenes Methanol (Alkylmercaptane und Naphtha)
- 110: Wasser/Methanol
- 111: Methanol/Wasser
- 112: Naphtha (Rohprodukt, schwefelhaltig)
- 113: Regeneriertes Methanol
- 114: Beladenes Methanol (CO₂)
- 115: Beladenes Methanol (CO₂)
- 116: Beladenes Methanol (CO₂)
- 117: Beladenes Methanol (H₂S, COS)
- 118: Kohlendioxid
- 119: Schwefelhaltige Gase (H₂S, COS)
- 120: Methylmercaptan, Schwefelwasserstoff
- 121: Wasser
- 122: Naphtha (Nebenerzeugnis, schwefelfrei)

## Patentansprüche

1. Verfahren (10) zur stufenweisen Abtrennung von Begleitstoffen aus einem Rohsynthesegasstrom (100) zur Erzeugung von Synthesegas (101), durch Absorption der Begleitstoffe in einem im Gegenstrom zum Rohsynthesegasstrom (100) geführten physikalisch wirkenden Waschmittel in einer Mehrzahl von Waschstufen (PW, MW1, MW 2) bei erhöhtem Druck, wobei die Begleitstoffe zumindest Kohlendioxid (CO₂), eine oder mehrere Schwefelverbindungen einer ersten Art, eine oder mehrere Schwefelverbindungen einer zweiten Art, sowie Naphtha umfassen, wobei das Verfahren die folgenden Schritte umfasst:
a) Absorption von zumindest Naphtha und Schwefelverbindungen der ersten Art in einer Vorwaschstufe (PW), wobei eine zumindest mit Naphtha sowie Schwefelverbindungen der ersten Art beladene Waschmittelfraktion (106, 109) erhalten wird;
b) Vermischen der gemäß Schritt a) erhaltenen beladenen Waschmittelfraktion (106, 109) mit Wasser, wodurch eine Phasentrennung in zwei flüssige Phasen resultiert, wobei eine erste flüssige Phase (111) Wasser und Waschmittel umfasst, und eine zweite flüssige Phase (112) Naphtha und darin gelöste Schwefelverbindungen der ersten Art umfasst;
c) Erhitzen der gemäß Schritt b) erhaltenen zweiten flüssigen Phase, wobei die Schwefelverbindungen der ersten Art entfernt werden und schwefelfreies Naphtha (122) erhalten wird;
d) Absorption von Kohlendioxid und Schwefelverbindungen der zweiten Art in zumindest einer der Vorwaschstufe (PW) in Gasflussrichtung nachgeschalteten Hauptwaschstufe (MW 1, MW 2), wobei zumindest eine mit zumindest Kohlendioxid oder Schwefelverbindungen der zweiten Art beladene Waschmittelfraktion (114, 115, 116, 117) erhalten wird;
e) Regenerieren der gemäß der Schritte a) und d) erhaltenen beladenen Waschmittelfraktionen und Wiederverwendung des regenerierten Waschmittels (113) zur Absorption von Begleitstoffen gemäß der Schritte a) und d),
wobei die Schwefelverbindungen der ersten Art zumindest ein Element aus der Gruppe Alkylmercaptane (R-SH), Kohlenstoffdisulfid (CS₂), Thiophene umfassen,
die Schwefelverbindungen der zweiten Art zumindest ein Element aus der Gruppe Schwefelwasserstoff (H₂S), Carbonylsulfid (COS) umfassen, und das Waschmittel Methanol umfasst.

2. Verfahren nach Anspruch 1, **dadurch gekennzeichnet, dass** die mit Naphtha sowie Schwefelverbindungen der ersten Art beladene Waschmittelfraktion (106) einer Druckentspannungsstufe (FR) zur Rückgewinnung von Wertgasen (107, 108), insbesondere von Wasserstoff (H₂) und Kohlenmonoxid (CO), zugeführt wird.

3. Verfahren nach Anspruch 1 oder 2, **dadurch gekennzeichnet, dass** die erste flüssige Phase (111) einem thermischen Trennverfahren zur Abtrennung von Naphtha-Rückständen aus der ersten flüssigen Phase unterzogen wird, wobei Naphtha und ein Wasser-Waschmittel-Gemisch als Produkte des thermischen Trennverfahrens erhalten werden.

4. Verfahren nach Anspruch 3, **dadurch gekennzeichnet, dass** das aus der ersten flüssigen Phase thermisch abgetrennte Naphtha zu Schritt b) zurückgeführt wird.

5. Verfahren nach Anspruch 3 oder 4, **dadurch gekennzeichnet, dass** das thermisch abgetrennte Wasser-Waschmittel-Gemisch einem weiteren thermischen Trennverfahren unterzogen wird, wobei Wasser und Waschmittel als Produkte des thermischen Trennverfahrens erhalten werden, und das erhaltene Waschmittel heiß regeneriert und anschließend zur Absorption von Begleitstoffen gemäß der Schritte a) und/oder d) wiederverwendet wird.

6. Verfahren nach einem der vorherigen Ansprüche, **dadurch gekennzeichnet, dass** die Schwefelverbindungen der ersten Art aus der zweiten flüssigen Phase (112) durch Erhitzen in einer Stripp-Kolonne (SC) entfernt werden.

7. Verfahren nach einem der vorherigen Ansprüche, **dadurch gekennzeichnet, dass** die Schwefelverbindung der ersten Art aus der zweiten flüssigen Phase (112) durch Einleiten von Sattdampf in die zweite flüssige Phase entfernt werden, und das schwefelfreie Naphtha (122) anschließend einem weiteren Behandlungsschritt zur Abtrennung von Wasser unterzogen wird.

8. Verfahren nach einem der vorherigen Ansprüche, **dadurch gekennzeichnet, dass** die aus der zweiten flüssigen Phase (112) durch Erhitzen entfernten Schwefelverbindungen der ersten Art einer Schwefelrückgewinnungsanlage zugeführt werden.

9. Anlage (10) zur stufenweisen Abtrennung von Begleitstoffen aus einem Rohsynthesegasstrom (100) zur Erzeugung von Synthesegas (101), durch Absorption der Begleitstoffe in einem im Gegenstrom zum Rohsynthesegasstrom (100) geführten physikalisch wirkenden Waschmittel in einer Mehrzahl von Waschstufen (PW, MW 1, MW2) bei erhöhtem Druck, wobei die Begleitstoffe zumindest Kohlendioxid (CO₂), eine oder mehrere Schwefelverbindungen einer ersten Art, eine oder mehrere Schwefelverbindungen einer zweiten Art, sowie Naphtha umfassen,
wobei die Schwefelverbindungen der ersten Art zumindest ein Element aus der Gruppe Alkylmercaptane (R-SH), Kohlenstoffdisulfid (CS₂), Thiophene umfassen,
die Schwefelverbindungen der zweiten Art zumindest ein Element aus der Gruppe Schwefelwasserstoff (H₂S), Carbonylsulfid (COS) umfassen, und das Waschmittel Methanol umfasst,
wobei die Anlage folgende Komponenten aufweist:
a) Einen Vorwäscher (PW) zur Absorption von zumindest Naphtha und Schwefelverbindungen der ersten Art im Waschmittel, wodurch eine zumindest mit Naphtha sowie Schwefelverbindungen der ersten Art beladene Waschmittelfraktion (106, 109) im Vorwäscher erhältlich ist;
b) eine Extraktionsvorrichtung (NE) zum Vermischen der im Vorwäscher (PW) erhältlichen beladenen Waschmittelfraktion (106, 109) mit Wasser, zum Erzeugen einer Phasentrennung in zwei flüssige Phasen, wobei eine erste flüssige Phase (111) umfassend Wasser und Waschmittel erhältlich ist, und eine zweite flüssige Phase (112) umfassend Naphtha und darin gelöste Schwefelverbindungen der ersten Art erhältlich ist;
c) eine der Extraktionsvorrichtung NE) nachgeschaltete Kolonne (SC), in welcher die zweite flüssige Phase (112) erhitzbar ist und die Schwefelverbindungen der ersten Art dadurch entfernbar sind, wodurch in der Kolonne schwefelfreies Naphtha (122) erhältlich ist;
d) einen dem Vorwäscher (PW) in Gasflussrichtung nachgeschalteten Hauptwäscher (MW 1, MW 2) zur Absorption von Kohlendioxid und Schwefelverbindungen der zweiten Art, wobei der Hauptwäscher (MW 1, MW 2) zumindest eine Hauptwaschstufe umfasst, in der zumindest eine mit zumindest Kohlendioxid oder Schwefelverbindungen der zweiten Art beladene Waschmittelfraktion (114, 115, 116, 117) erhältlich ist;
e) ein Regenerationssystem (RS), in dem die im Vorwäscher (PW) und Hauptwäscher (MW 1, MW 2) erhältlichen Waschmittelfraktionen für die erneute Absorption von Begleitstoffen im Vorwäscher (PW) und Hauptwäscher (MW 1, MW 2) regenerierbar sind.

10. Verwendung des Verfahrens nach einem der Ansprüche 1 bis 8 oder der Anlage gemäß Anspruch 9 zur Behandlung eines Rohsynthesegases (100) aus einer Festbettdruckvergasung eines kohlenstoffhaltigen Einsatzstoffes.

11. Verwendung nach Anspruch 10, **dadurch gekennzeichnet, dass** der kohlenstoffhaltige Einsatzstoff zumindest ein Element aus der Gruppe Kohle, Petrolkoks umfasst.

## Claims

1. Process (10) for staged separation of concomitants from a raw synthesis gas stream (100) to produce synthesis gas (101) by absorption of the concomitants in a physical scrubbing medium run in countercurrent to the raw synthesis gas stream (100) in a plurality of scrubbing stages (PW, MW 1, MW 2) at elevated pressure, wherein the concomitants comprise at least carbon dioxide (CO₂), one or more sulfur compounds of a first type, one or more sulfur compounds of a second type and naphtha, wherein the process comprises the following steps:
a) absorbing at least naphtha and sulfur compounds of the first type in a prescrubbing stage (PW) to afford a scrubbing medium fraction (106, 109) laden at least with naphtha and sulfur compounds of the first type;
b) mixing the laden scrubbing medium fraction (106, 109) obtained in step a) with water to effect a phase separation into two liquid phases, wherein a first liquid phase (111) comprises water and scrubbing medium and a second liquid phase (112) comprises naphtha and sulfur compounds of the first type dissolved therein;
c) heating the second liquid phase obtained in step b) to remove the sulfur compounds of the first type and obtain sulfur-free naphtha (122);
d) absorbing carbon dioxide and sulfur compounds of the second type in at least one main scrubbing stage (MW 1, MW 2) arranged downstream of the prescrubbing stage (PW) in the gas flow direction to obtain at least one scrubbing medium fraction (114, 115, 116, 117) laden with at least carbon dioxide or sulfur compounds of the second type;
e) regenerating the laden scrubbing medium fractions obtained in steps a) and d) and reusing the regenerated scrubbing medium (113) for absorbing concomitants in steps a) and d),
wherein the sulfur compounds of the first type comprise at least one element from the group of alkyl mercaptans (R-SH), carbon disulfide (CS₂), thiophenes,
the sulfur compounds of the second type comprise at least one element from the group of hydrogen sulfide (H₂S), carbonyl sulfide (COS),
and the scrubbing medium comprises methanol.

2. Process according to Claim 1, **characterized in that** the scrubbing medium fraction (106) laden with naphtha and sulfur compounds of the first type is supplied to a decompression stage (FR) for recovery of valuable gases (107, 108), in particular of hydrogen (H₂) and carbon monoxide (CO).

3. Process according to Claim 1 or 2, **characterized in that** the first liquid phase (111) is subjected to a thermal separation process for separating naphtha residues from the first liquid phase to obtain naphtha and a water-scrubbing medium mixture as products of the thermal separation process.

4. Process according to Claim 3, **characterized in that** the naphtha thermally separated from the first liquid phase is recycled to step b).

5. Process according to Claim 3 or 4, **characterized in that** the thermally separated water-scrubbing medium mixture is subjected to a further thermal separation process to obtain water and scrubbing medium as products of the thermal separation process, and the obtained scrubbing medium is subjected to hot regeneration and subsequently reused for absorbing concomitants in steps a) and/or d).

6. Process according to any of the preceding claims, **characterized in that** the sulfur compounds of the first type are removed from the second liquid phase (112) by heating in a stripping column (SC).

7. Process according to any of the preceding claims, **characterized in that** the sulfur compounds of the first type are removed from the second liquid phase (112) by introduction of saturated steam into the second liquid phase, and the sulfur-free naphtha (122) is subsequently subjected to a further treatment step for separation of water.

8. Process according to any of the preceding claims, **characterized in that** the sulfur compounds of the first type removed from the second liquid phase (112) by heating are supplied to a sulfur recovery plant.

9. Plant (10) for staged separation of concomitants from a raw synthesis gas stream (100) to produce synthesis gas (101) by absorption of the concomitants in a physical scrubbing medium run in countercurrent to the raw synthesis gas stream (100) in a plurality of scrubbing stages (PW, MW 1, MW 2) at elevated pressure, wherein the concomitants comprise at least carbon dioxide (CO₂), one or more sulfur compounds of a first type, one or more sulfur compounds of a second type and naphtha,
wherein the sulfur compounds of the first type comprise at least one element from the group of alkyl mercaptans (R-SH), carbon disulfide (CS₂), thiophenes,
the sulfur compounds of the second type comprise at least one element from the group of hydrogen sulfide (H₂S), carbonyl sulfide (COS), and the scrubbing medium comprises methanol,
wherein the plant comprises the following components:
a) a prescrubber (PW) for absorbing at least naphtha and sulfur compounds of the first type in the scrubbing medium, by means of which a scrubbing medium fraction (106, 109) laden at least with naphtha and sulfur compounds of the first type is obtainable in the prescrubber;
b) an extraction apparatus (NE) for mixing the laden scrubbing medium fraction (106, 109) obtainable in the prescrubber (PW) with water to produce a phase separation into two liquid phases, by means of which a first liquid phase (111) comprising water and scrubbing medium is obtainable and a second liquid phase (112) comprising naphtha and sulfur compounds of the first type dissolved therein is obtainable;
c) a column (SC) arranged downstream of the extraction apparatus (NE) in which the second liquid phase (112) is heatable and the sulfur compounds of the first type are thus removable, by means of which sulfur-free naphtha (122) is obtainable in the column;
d) a main scrubber (MW 1, MW 2) arranged downstream of the prescrubber (PW) in the gas flow direction for absorption of carbon dioxide and sulfur compounds of the second type, wherein the main scrubber (MW 1, MW 2) comprises at least one main scrubber stage in which at least one scrubbing medium fraction (114, 115, 116, 117) laden with at least carbon dioxide or sulfur compounds of the second type is obtainable;
e) a regeneration system (RS) in which the scrubbing medium fractions obtainable in the prescrubber (PW) and the main scrubber (MW 1, MW 2) are regenerable for reabsorption of concomitants in the prescrubber (PW) and the main scrubber (MW 1, MW 2).

10. Use of the process according to any of Claims 1 to 8 or the plant according to Claim 9 for treatment of a raw synthesis gas (100) from a fixed bed pressure gasification of a carbon-containing input material.

11. Use according to Claim 10, **characterized in that** the carbon-containing input material comprises at least one element from the group of coal, petroleum coke.

## Revendications

1. Procédé (10) pour la séparation étagée d'impuretés à partir d'un flux de gaz de synthèse brut (100) pour la production de gaz de synthèse (101) par absorption des impuretés dans un agent de lavage agissant par voie physique, guidé à contre-courant par rapport au flux de gaz de synthèse brut (100) dans une multitude d'étages de lavage (PW, MW1, MW2) à pression augmentée, les impuretés comprenant au moins du dioxyde de carbone (CO₂), un ou plusieurs composés soufrés d'un premier type, un ou plusieurs composés soufrés d'un deuxième type, ainsi que du naphta, le procédé comprenant les étapes suivantes :
a) absorption au moins de naphta et de composés soufrés du premier type dans un étage de prélavage (PW), une fraction d'agent de lavage (106, 109) chargée au moins de naphta ainsi que de composés soufrés du premier type étant obtenue ;
b) mélange de la fraction d'agent de lavage (106, 109) chargée obtenue selon l'étape a) avec de l'eau, ce qui entraîne une séparation des phases en deux phases liquides, une première phase liquide (111) comprenant de l'eau et de l'agent de lavage et une deuxième phase liquide (112) comprenant du naphta et des composés soufrés du premier type dissous dans celui-ci ;
c) chauffage de la deuxième phase liquide obtenue selon l'étape b), les composés soufrés du premier type étant éliminés et du naphta exempt de soufre (122) étant obtenu ;
d) absorption de dioxyde de carbone et de composés soufrés du deuxième type dans au moins un étage de lavage principal (MW1, MW2) disposé en aval de l'étage de prélavage (PW) dans le sens d'écoulement du gaz, au moins une fraction d'agent de lavage (114, 115, 116, 117) chargée au moins de dioxyde de carbone ou de composés soufrés du deuxième type étant obtenue ;
e) régénération des fractions d'agent de lavage chargées obtenues selon les étapes a) et d) et réutilisation de l'agent de lavage régénéré (113) pour l'absorption d'impuretés selon les étapes a) et d),
les composés soufrés du premier type comprenant au moins un élément du groupe formé par les alkylmercaptans (R-SH), le disulfure de carbone (CS₂), le thiophène, les composés soufrés du deuxième type comprenant au moins un élément du groupe formé par le sulfure d'hydrogène (H₂S), le sulfure de carbonyle (COS) et l'agent de lavage comprenant du méthanol.

2. Procédé selon la revendication 1, **caractérisé en ce que** la fraction d'agent de lavage (106) chargée de naphta ainsi que de composés soufrés du premier type est introduite dans un étage de détente de pression (FR) pour la récupération de gaz de valeur (107, 108), en particulier d'hydrogène (H₂) et de monoxyde de carbone (CO) .

3. Procédé selon la revendication 1 ou 2, **caractérisé en ce que** la première phase liquide (111) est soumise à un procédé de séparation thermique pour la séparation de résidus de naphta à partir de la première phase liquide, du naphta et un mélange eau-agent de lavage étant obtenus comme produits du procédé de séparation thermique.

4. Procédé selon la revendication 3, **caractérisé en ce que** le naphta séparé thermiquement à partir de la première phase liquide est recyclé dans l'étape b).

5. Procédé selon la revendication 3 ou 4, **caractérisé en ce que** le mélange eau-agent de lavage thermiquement séparé est soumis à un autre procédé de séparation thermique, de l'eau et de l'agent de lavage étant obtenus comme produits du procédé de séparation thermique et l'agent de lavage obtenu étant régénéré à chaud et ensuite réutilisé pour l'absorption d'impuretés selon les étapes a) et/ou d).

6. Procédé selon l'une quelconque des revendications précédentes, **caractérisé en ce que** les composés soufrés du premier type sont éliminés à partir de la deuxième phase liquide (112) par chauffage dans une colonne d'extraction (SC).

7. Procédé selon l'une quelconque des revendications précédentes, **caractérisé en ce que** les composés soufrés du premier type sont éliminés à partir de la deuxième phase liquide (112) par introduction de vapeur saturée dans la deuxième phase liquide et le naphta exempt de soufre (122) est ensuite soumis à une autre étape de traitement pour la séparation de l'eau.

8. Procédé selon l'une quelconque des revendications précédentes, **caractérisé en ce que** les composés soufrés du premier type éliminés par chauffage à partir de la deuxième phase liquide (112) sont introduits dans une installation de récupération de soufre.

9. Installation (10) pour la séparation étagée d'impuretés à partir d'un flux de gaz de synthèse brut (100) pour la production de gaz de synthèse (101) par absorption des impuretés dans un agent de lavage agissant par voie physique, guidé à contre-courant par rapport au flux de gaz de synthèse brut (100) dans une multitude d'étages de lavage (PW, MW1, MW2) à pression augmentée, les impuretés comprenant au moins du dioxyde de carbone (CO₂), un ou plusieurs composés soufrés d'un premier type, un ou plusieurs composés soufrés d'un deuxième type, ainsi que du naphta,
les composés soufrés du premier type comprenant au moins un élément du groupe formé par les alkylmercaptans (R-SH), le disulfure de carbone (CS₂), le thiophène,
les composés soufrés du deuxième type comprenant au moins un élément du groupe formé par le sulfure d'hydrogène (H₂S), le sulfure de carbonyle (COS) et
l'agent de lavage comprenant du méthanol, l'installation présentant les composants suivants :
a) un dispositif de prélavage (PW) pour l'absorption au moins de naphta et de composés soufrés du premier type dans l'agent de lavage, une fraction d'agent de lavage (106, 109) chargée au moins de naphta ainsi que de composés soufrés du premier type pouvant être obtenue dans le dispositif de prélavage ;
b) un dispositif d'extraction (NE) pour le mélange de la fraction d'agent de lavage (106, 109) chargée obtenue dans le dispositif de prélavage (PW) avec de l'eau pour réaliser une séparation de phases en deux phases liquides, une première phase liquide (111) comprenant de l'eau et de l'agent de lavage pouvant être obtenue et une deuxième phase liquide (112) comprenant du naphta et des composés soufrés du premier type qui sont dissous dans celui-ci pouvant être obtenue ;
c) une colonne (SC) disposée en aval du dispositif d'extraction (NE), dans laquelle la deuxième phase liquide (112) peut être chauffée et les composés soufrés du premier type peuvent ainsi être éliminés, suite à quoi du naphta exempt de soufre (122) peut être obtenu dans la colonne ;
d) un dispositif de lavage principal (MW1, MW2) disposé en aval du dispositif de prélavage (PW) dans le sens d'écoulement du gaz pour l'absorption de dioxyde de carbone et de composés soufrés du deuxième type, le dispositif de lavage principal (MW1, MW2) comprenant au moins un étage de lavage principal dans lequel une fraction d'agent de lavage (114, 115, 116, 117) chargée au moins de dioxyde de carbone ou de composés soufrés du deuxième type peut être obtenue ;
e) un système de régénération (RS) dans lequel les fractions d'agent de lavage pouvant être obtenues dans le dispositif de prélavage (PW) et le dispositif de lavage principal (MW1, MW2) peuvent être régénérées pour une nouvelle absorption d'impuretés dans le dispositif de prélavage (PW) et le dispositif de lavage principal (MW1, MW2).

10. Utilisation du procédé selon l'une quelconque des revendications 1 à 8 ou de l'installation selon la revendication 9 pour le traitement d'un gaz de synthèse brut (100) provenant d'une gazéification sous pression en lit fixe d'une matière première contenant du carbone.

11. Utilisation selon la revendication 10, **caractérisée en ce que** la matière première contenant du carbone comprend au moins un élément du groupe formé par le charbon, le coke de pétrole.
